# EUROPÄISCHE PATENTSCHRIFT

(11) **EP 3 047 183 B1**
(45) Veröffentlichungstag und Bekanntmachung des Hinweises auf die Patenterteilung: **26.12.2018**
(21) Anmeldenummer: 14750697.6
(22) Anmeldetag: 12.08.2014
(51) Int. Cl.: F16K 27/02, F16K 31/06

(54) **STEUERVORRICHTUNG ZUM WAHLWEISEN FLUIDISCHEN VERBINDEN UND TRENNEN VON FLUID-ANSCHLUSSSTELLEN**
CONTROL DEVICE FOR SELECTIVELY FLUIDICALLY CONNECTING AND DISCONNECTING FLUID CONNECTION POINTS
DISPOSITIF DE COMMANDE POUR EFFECTUER SÉLECTIVEMENT UNE CONNEXION FLUIDIQUE ET UNE DÉCONNEXION DE POINTS DE RACCORDEMENT FLUIDIQUE

(30) Priorität: 16.09.2013 DE 102013015481
(43) Veröffentlichungstag der Anmeldung: 27.07.2016
(73) Patentinhaber: Hydac Fluidtechnik GmbH, 66280 Sulzbach/Saar (DE)
(72) Erfinder: SCHNEIDER, Gerd, 66763 Dillingen (DE); BRUCK, Peter, 66484 Althornbach (DE)
(74) Vertreter: Bartels und Partner, Patentanwälte
(86) Internationale Anmeldenummer: PCT/EP2014/002211
(87) Internationale Veröffentlichungsnummer: WO 2015/036076

(56) Entgegenhaltungen:
- EP-A1- 0 947 754
- EP-A1- 1 643 174
- DE-A1-102007 042 046
- US-A- 3 921 111
- US-A- 5 374 029

## Beschreibung

Die Erfindung betrifft eine Steuervorrichtung mit den Merkmalen im Oberbegriff von Anspruch 1.

Steuervorrichtungen dieser Art werden sehr häufig für mobile Arbeitsmaschinen zur elektrohydraulischen Ansteuerung von Kupplungen und hydraulischen Stellelementen eingesetzt. Üblicherweise werden hierbei Ventileinrichtungen in Form sog. Proportional-Druckregelventile, wie 3/2-Wege-Schieberventile, benutzt. Die anzusteuernden Kupplungen und hydraulischen Stellelemente sind bei diesen Anwendungen in Getriebegehäusen verbaut. Die Ventileinrichtungen sind hierbei üblicherweise durch in einen zugehörigen Steuerblock eingesetzte, sog. Cartridge-Ventile gebildet, wobei die Steuerblöcke seitlich am betreffenden Getriebe angeflanscht sind. In Anbetracht der Tatsache, dass beispielsweise bei Traktorgetrieben unter Umständen mehr als zehn Ventile zur Ansteuerung von Kupplungen und Stellantrieben nötig sein können und dass jedes der Ventile mit einem Pumpen- und einem Tankanschluss zu verbinden ist und der Arbeitsanschluss jedes Ventils mit der jeweils anzusteuernden Kupplung oder dem Stellelement zu verbinden ist, entsteht ein beträchtlicher Bau- und Kostenaufwand für die Ausbildung der erforderlichen Fluid-Verbindungswege einschließlich zugeordneter Verrohrungen.

Die DE 10 2007 042 046 A1 und die EP 1 643 174 A1 beschreiben jeweils Steuervorrichtung mit einer Ventileinrichtung und einem Steuerblock zum wahlweisen fluidischen Verbinden und Trennen von am Steuerblock ausgebildeten Fluid-Anschlussstellen mittels der Ventileinrichtung, die ein Ventilgehäuse und einen innerhalb des Ventilgehäuses längsverfahrbar geführten Ventilschieber aufweist und die zwischen den Anschlussstellen verlaufende fluidführende Verbindungskanäle ansteuert, die in dem Steuerblock angeordnet sind, in den die Ventileinrichtung zumindest teilweise eingesetzt ist, wobei ausgehend von den jeweiligen Fluid-Anschlussstellen die jeweils an sie angeschlossenen Verbindungskanäle bis zum Ausmünden in einen jeweils zugeordneten Steuerraum der Ventileinrichtung parallel zueinander verlaufend angeordnet sind und wobei die Ventileinrichtung in einer im Steuerblock aufgenommenen Aufnahme gehalten ist, die zumindest zwei benachbart angeordnete Steuerräume voneinander separiert.

Weitere Ventile gehen aus der US 3 921 111, der US 5 374 029 und der EP 0 947 754 A1 hervor.

Im Hinblick auf diese Problematik stellt sich die Erfindung die Aufgabe, eine Steuervorrichtung der besagten Gattung zur Verfügung zu stellen, die sich durch eine kostengünstig herstellbare Bauweise und ein günstiges Betriebsverhalten auszeichnet.

Diese Aufgabe ist erfindungsgemäß durch eine Steuervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass im Hinblick auf die Parallelanordnung der Verbindungskanäle die Aufnahme in Form einer Aufnahmeplatte für die Ventileinrichtung außermittig zur Verfahrachse des innerhalb des Ventilgehäuses längsverfahrbar geführten Ventilschiebers im Steuerblock aufgenommen ist.

Es ist ferner vorgesehen, dass ausgehend von den jeweiligen Fluid-Anschlussstellen die jeweils an sie angeschlossenen Verbindungskanäle bis zum Ausmünden in einen jeweils zugeordneten Steuerraum der Ventileinrichtung parallel zueinander verlaufend angeordnet sind und dass die Ventileinrichtung in einer Aufnahme gehalten ist, die zumindest zwei benachbart angeordnete Steuerräume voneinander separiert. Dadurch, dass die Aufnahme, die im Einbauraum einen Sitz für die Ventil-einrichtung bildet, eine Dichtstelle zwischen Steuerräumen bildet, die bei den in Frage kommenden Schieberventilen zueinander axial versetzt sind, sind im Einbauraum axial zueinander versetzte Terrassenstufen gebildet, so dass sich die Möglichkeit eröffnet, Anschluss-Verbindungskanäle einfach und kostengünstig durch parallel verlaufende Bohrungen auszubilden, die zur Ventilachse beliebig, d.h. auch senkrecht oder leicht schräg, verlaufen können. Da somit die Verbindungskanäle zu den jeweiligen Stufen des Ventils, die bei den in Frage kommenden Ventilen, wie Cartridge-Ventilen, in axialen Stufen zueinander versetzt sind, nicht mehr senkrecht zur Ventilachse verlaufen müssen, eröffnet sich die besonders vorteilhafte Möglichkeit, parallel verlaufende Verbindungskanäle in beliebiger Richtung zur Ventilachse, beispielsweise parallel zur Ventilachse oder leicht schräg zur Ventilachse, auszubilden. Die freie Gestaltungsmöglichkeit ermöglicht eine kostengünstige Fertigung und eine Ausgestaltung mit sehr kurzen Fluid-Verbindungswegen, was die Dynamik des Betriebsverhaltens verbessert.

In vorteilhafter Weise kann die Ventileinrichtung mit einem Gehäuse versehen sein, das selbst zumindest teilweise einen Steuerraum ausbildet und/oder das mindestens eine Bohrung aufweist, die in einen Steuerraum ausmündet. Dadurch ergeben sich besonders kurze Fluid-Verbindungs-wege.

Mit besonderem Vorteil kann die Anordnung hierbei so getroffen sein, dass die Aufnahme aus einer kreiszylindrischen Aufnahmeplatte gebildet ist, die für die Aufnahme des Ventilgehäuses eine bevorzugt kreiszylindrische Aus-nehmung aufweist, deren Mittenachse parallel zur Mittenachse der Aufnahmeplatte verlaufend zu dieser versetzt angeordnet ist. Diese Versetzung ermöglicht es, den die Aufnahmeplatte umgehenden Verbindungskanal entsprechend der Exzentrizität der Ausnehmung näher an die Ventilachse heranzubringen, wodurch sich eine Einsparung an für den Steuerblock erforderlichem Bauraum ergibt.

Dadurch kann in besonders vorteilhafter Weise der Verbindungskanal für den Druckversorgungsanschluss und der Verbindungskanal für den Nutzanschluss mit ihrer jeweiligen Längsachse annähernd denselben Abstand zu der Verfahrachse des Ventilschiebers einnehmen, wobei die Längsachse des Verbindungskanals für den Tank- oder Rücklaufanschluss deckungsgleich mit der Verfahrachse des Ventilschiebers sein kann.

Der Druckversorgungs-Verbindungskanal kann im Steuerblock verlaufend in axialer Richtung länger ausgebildet sein als der Nutzanschluss-Verbindungskanal und dieser wiederum länger als der Tank-Verbindungs-kanal. Weiterhin kann bei vorteilhaften Ausführungsbeispielen die Anordnung so getroffen sein, dass der Steuerraum, in den der Druckversorgungs-Verbindungskanal ausmündet, in Betätigungsrichtung des Ventilschiebers gesehen oberhalb des Steuerraums liegt, in den der Nutzanschluss-Verbindungskanal ausmündet, wobei diese beiden Steuerräume durch die Aufnahme fluiddicht voneinander getrennt sind.

Bei dieser Anordnung der Aufnahme kann der Steuerraum, in den der Nutzanschluss-Verbindungskanal ausmündet, in Betätigungsrichtung des Ventilschiebers gesehen oberhalb des Steuerraums liegen, in den der Tank-Verbindungskanal ausmündet, wobei diese beiden benachbarten Steuerräume von Ventilgehäuseteilen voneinander fluiddicht getrennt sind, die von Teilen des Steuerblocks umfasst sind.

Bei besonders vorteilhaften Ausführungsbeispielen kann die die Aufnahme bildende Platte außenumfangsseitig von einer Dichteinrichtung umfasst sein, die die Abdichtung zwischen Aufnahme und Steuerblock herstellt.

Ein besonderer Vorteil der Erfindung besteht darin, dass der Steuerblock Bestandteil eines Getriebegehäuses sein kann, insbesondere einer mobilen Arbeitsmaschine ist, oder auf das Getriebegehäuse aufsetzbar ist. Dies ermöglicht, insbesondere bei vollständigem Entfall des Steuerblocks, eine beträchtliche Kosteneinsparung, verbunden mit einer entsprechenden Verringerung des erforderlichen Bauraums, Vereinfachung durch geringeren Aufwand für Verrohrungen und Verbesserung des Betriebsverhaltens durch bessere Dynamik aufgrund kurzer Verbindungswege.

Nachstehend ist die Erfindung anhand eines in der Zeichnung dargestellten Ausführungsbeispiels im Einzelnen erläutert. Es zeigen:
- Fig. 1: einen Längsschnitt eines Ausführungsbeispiels der erfindungsgemäßen Steuervorrichtung;
- Fig. 2: eine Seitenansicht des Ausführungsbeispiels, wobei der Bereich des Einbauraumes eines zugeordneten Steuerblocks längsgeschnitten dargestellt ist; und
- Fig. 3: einen Querschnitt entsprechend der Schnittlinie III-III von Fig. 2.

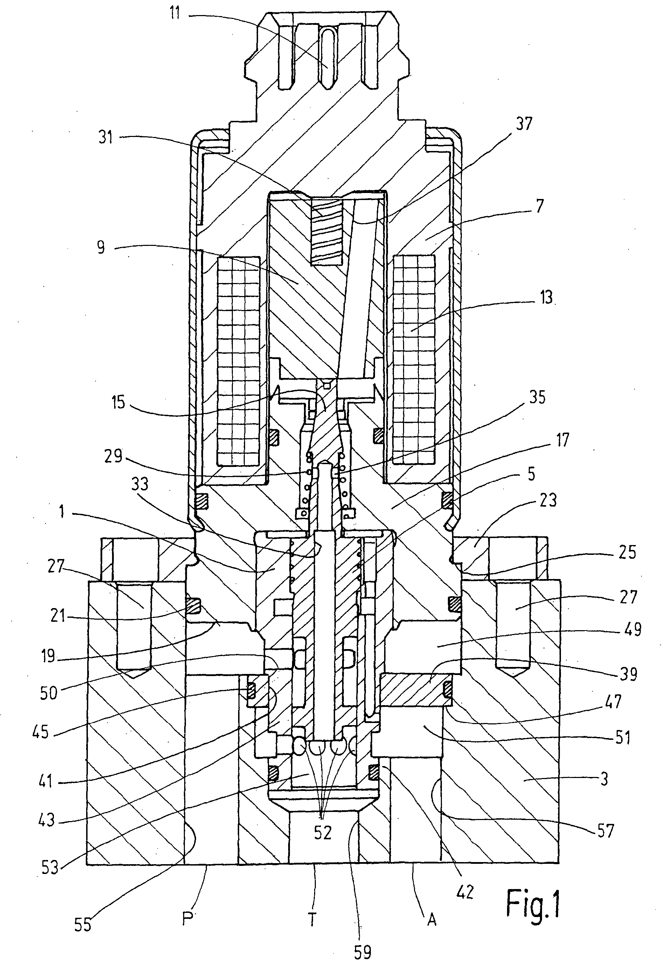

Bei der in den Figuren gezeigten Steuervorrichtung weist die Ventileinrichtung ein Proportional-Druckregelventil auf, das in Form eines elektromagnetisch betätigbaren Cartridge-Ventils mit seinem Ventilgehäuse 1 in einen Steuerblock 3 eingebaut ist. Der Steuerblock 3 bildet in üblicher Weise Fluid-Anschlussstellen, von denen ein Druckversorgungsanschluss mit P, ein Nutzanschluss mit A und ein Rücklauf- oder Tankanschluss mit T bezeichnet sind. Ein im Ventilgehäuse 1 längsverfahrbar geführter Ventilkolben 5 ist mittels einer Betätigungseinrichtung 7 in Form eines sog. Betätigungsmagneten für das Einnehmen seiner einzelnen Verfahrstellungen ansteuerbar. Die Betätigungseinrichtung 7 ist nach dem Stand der Technik ausgeführt und weist zum Verfahren eines Magnetankers 9 eine mittels eines Steckers 11 bestrombare Spulenwicklung 13 auf. Die Betätigungseinrichtung 7 ist als sog. drückender Magnet ausgeführt, d.h. bei Bestromung der Spulenwicklung 13 bewegt sich der Magnetanker 9 in Blickrichtung auf die Fig. 1 gesehen nach unten und übt über einen Betätigungsstößel 15, der durch einen Fortsatz des Ventilkolbens 5 gebildet ist, auf diesen eine Kraft aus, die eine Verfahrbewegung des Ventilkolbens 5 auslöst.

Die Betätigungseinrichtung 7 weist einen Polkern 17 auf, der sich bei dem eingebauten Zustand mit seinem Ende 19 in den Einbauraum des Steuerblocks 3 erstreckt, wobei ein Dichtelement 21 die Abdichtung des Einbauraums bildet. Im Einbauzustand bildet ein Flanschring 23, der an einer Stufe 25 des Polkerns 17 anliegt, eine Flanschverbindung mit dem Steuerblock 3 mittels Befestigungsschrauben 27. Der vorstehend beschriebene Aufbau der Ventileinrichtung, einschließlich einer Ventilfeder 29, die den Ventilkolben 5 in kraftschlüssiger Anlage am Magnetanker 9 hält, und einer schwach wirkenden Gegenfeder 31 am Magnetkolben 9, sind an sich bekannt. In ebenfalls bekannter Weise bildet eine Axialbohrung 33 im Ventilkolben 5 mit einer Querbohrung 35 und über eine im Magnetkolben 9 ausgebildete Schrägbohrung 37 einen Kanal für einen Druckausgleich bei Verfahrbewegungen von Magnetanker 9 und Ventilkolben 5, wie dies ebenfalls bei derartigen Ventileinrichtungen an sich bekannt ist.

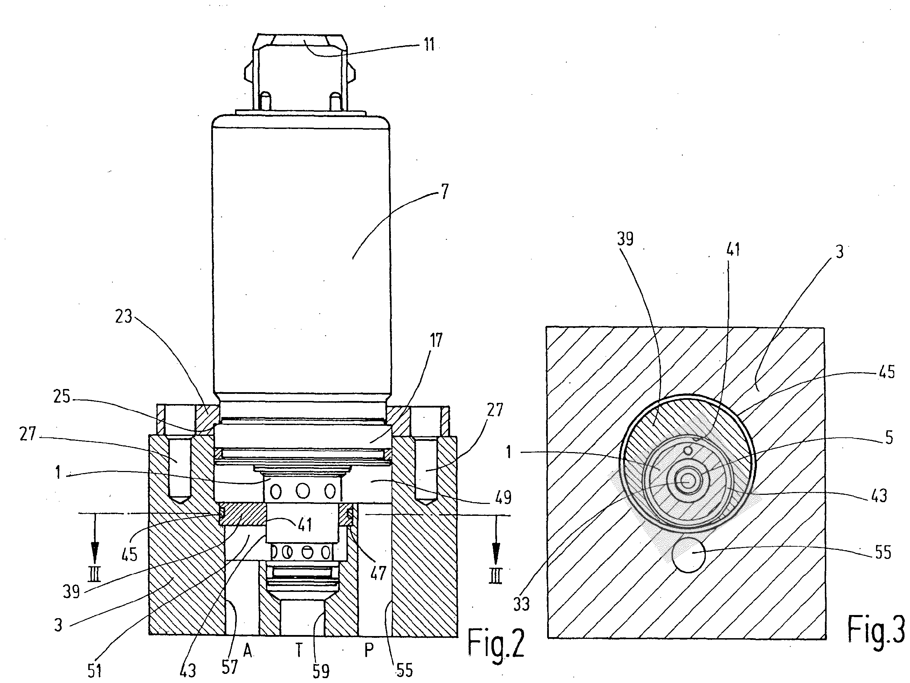

Wie die Figuren zeigen, ist im Einbauraum im Steuerblock 3 als Aufnahme, die einen Sitz für das Ventilgehäuse 1 bildet, eine Aufnahmeplatte 39 vorgesehen, die die Form eines kreisrunden zylindrischen Körpers besitzt, der eine kreiszylindrische Ausnehmung 41 (Fig. 1) aufweist, durch die sich das Ventilgehäuse 1 mit seinem kreiszylindrischen Endteil 43 hindurch erstreckt, wobei der Außenumfang des Endteils 43 fluiddicht an der Ausnehmung 41 anliegt. Am Außenumfang ist die Aufnahmeplatte 39 mittels eines Dichtelements 45 am Steuerblock 3 abgedichtet, wo die Aufnahmeplatte 39 an einer im Einbauraum gebildeten Stufe 47 anliegt. Bei dieser Anordnung bildet die Aufnahmeplatte 39 eine fluiddichte Trennung zwischen einem in Fig. 1 und 2 obenliegenden Steuerraum 49 und einem unteren Steuerraum 51, die in der bei Cartridge-Ventilen üblichen Weise Fluiddurchgänge des Ventilgehäuses 1 umgeben, die durch Bohrungen 50 und 52 gebildet sind. Mit seinem offenen Ende am Endteil 43 bildet das Ventilgehäuse 1 einen dritten Steuerraum 53.

Für die Fluidverbindung zwischen den Anschlussstellen für den Druckanschluss P, den Tankanschluss T und den Nutzanschluss A und den zugeordneten Steuerräumen 49 bzw. 53 bzw. 51 sind im Steuerblock 3 Verbindungskanäle ausgebildet. Diese sind jeweils durch zur Verfahrachse des Ventilkolbens 5 parallele Bohrungen ausgebildet, von denen eine Bohrung 55, im Abstand von der Verfahrachse gelegen, den Druckversorgungsanschluss P mit dem zugehörigen Steuerraum 49 verbindet. Eine ebenfalls im Abstand von der Verfahrachse befindliche Bohrung 57 verbindet die Nutzanschlussstelle A mit dem Steuerraum 51. Eine zur Verfahrachse koaxiale dritte Bohrung 59 verbindet die Tankanschlussstelle T über das offene Ende des Ventilgehäuses 1 mit dem Steuerraum 53. Dieser ist durch ein Gehäuseteil 42 des Steuerblocks 3, das das Endteil 43 des Ventilgehäuses 1 umfasst, gegen den Steuerraum 51 des Nutzanschlusses A abgedichtet. Wie aus den Figuren ersichtlich, umgeht die zum oberen Steuerraum 49 führende Bohrung 55 die Aufnahmeplatte 39, während die Bohrung 57, die zu dem auf tieferer Stufe gelegenen Steuerraum 51 führt, nach oben durch die Aufnahmeplatte 39 begrenzt ist. Zu diesem Zweck hat der die Aufnahmeplatte 39 bildende Rundkörper einen derartigen Durchmesser, dass er die Bohrung 57 übergreift und an seinem Umfangsrand an der Stufe 47 des Steuerblocks 3 anliegt. Um zu vermeiden, dass die gegenüberliegende Bohrung 55, die der Druckversorgungsanschlussstelle P zugeordnet ist und die die Aufnahmeplatte 39 umgehen muss, einen zu großen Abstand von der Verfahrachse benötigt, ist die Ausnehmung 41 für den Durchtritt des Ventilgehäuses 1 in der Aufnahmeplatte 39 nicht zentral, sondern außermittig angeordnet. Dank dieser exzentrischen Anordnung befindet sich die Stufe 47 auf der Seite der Bohrung 55 in einem geringeren Abstand von der Verfahrachse als die Stufe 47 im Bereich der gegenüberliegenden Bohrung 57. Dementsprechend lässt sich die Bohrung 55, obwohl sie die Aufnahmeplatte 39 umgehen muss, in annähernd gleichem Abstand von der Verfahrachse des Ventilkolbens 5 anordnen, wie dies bei der Bohrung 57 der Fall ist, was zu einer kompakten Bauweise beiträgt.

Dadurch, dass der an die Oberseite der Aufnahmeplatte 39 angrenzende Steuerraum 49 den Druck der Versorgungsanschlussstelle P führt, während der an die Unterseite angrenzende Steuerraum 51 den Druck der Nutzanschlussstelle A führt, legt sich die Anschlussplatte 39 aufgrund der Tatsache, dass im Betrieb der Druck im oberen Steuerraum 49 größer/gleich dem Druck im unteren Steuerraum 51 ist, auf die Stufe 47 im Einbauraum auf. Somit ergibt sich trotz der Exzentrizität kein auf den Ventilkörper 1 wirkendes Biegemoment, das zu einem Klemmen des Ventilkolbens 5 führen könnte.

Dank der Möglichkeit, die die Verbindungskanäle bildenden Bohrungen 55, 57, 59 achsparallel zur Verfahrachse des Ventils auszubilden, wodurch die Notwendigkeit entfällt, in einem betreffenden Gehäuse, das den Einbauraum für das jeweilige Cartridge-Ventil bildet, Querbohrungen auszubilden, können die Ventile direkt auf ein Getriebegehäuse geflanscht werden, oder das Getriebegehäuse selbst kann mit Teilen Einbauräume bilden, die die Funktion jeweiliger Steuerblöcke ausüben. Mit anderen Worten gesagt, ermöglicht die Erfindung auch einen Direkteinbau der Steuervorrichtung in Getriebegehäuse, weil keine querverlaufenden Gehäusebohrungen erforderlich sind.

## Patentansprüche

1. Steuervorrichtung mit einer Ventileinrichtung (1, 5) und einem Steuerblock (3) zum wahlweisen fluidischen Verbinden und Trennen von am Steuerblock (3) ausgebildeten Fluid-Anschlussstellen (A, P, T) mittels der Ventileinrichtung (1, 5), die ein Ventilgehäuse (1) und einen innerhalb des Ventilgehäuses (1) längsverfahrbar geführten Ventilschieber (5) aufweist und die zwischen den Anschlussstellen (A, P, T) verlaufende fluidführende Verbindungskanäle (55, 57, 59) ansteuert, die in dem Steuerblock (3) angeordnet sind, in den die Ventileinrichtung (1, 5) zumindest teilweise eingesetzt ist, wobei ausgehend von den jeweiligen Fluid-Anschlussstellen (A, P, T) die jeweils an sie angeschlossenen Verbindungskanäle (55, 57, 59) bis zum Ausmünden in einen jeweils zugeordneten Steuerraum (49, 51, 53) der Ventileinrichtung (1, 5) parallel zueinander verlaufend angeordnet sind und wobei die Ventileinrichtung (1, 5) in einer im Steuerblock (3) aufgenommenen Aufnahme (39) gehalten ist, die zumindest zwei benachbart angeordnete Steuerräume (49, 51) voneinander separiert, **dadurch gekennzeichnet, dass** im Hinblick auf die Parallelanordnung der Verbindungskanäle (55, 57, 59) die Aufnahme in Form einer Aufnahmeplatte (39) für die Ventileinrichtung (1, 5) außermittig zur Verfahrachse des innerhalb des Ventilgehäuses (1) längsverfahrbar geführten Ventilschiebers (5) im Steuerblock (3) aufgenommen ist.

2. Steuervorrichtung nach Anspruch 1, **dadurch gekennzeichnet, dass** die Ventileinrichtung (1, 5) mit einem Gehäuse (1) versehen ist, das selbst zumindest teilweise einen Steuerraum (53) ausbildet und/oder das mindestens eine Bohrung (50, 52) aufweist, die in einen Steuerraum (49, 51) ausmündet.

3. Steuervorrichtung nach Anspruch 1 oder 2, **dadurch gekennzeichnet, dass** die Aufnahme aus einer kreiszylindrischen Aufnahmeplatte (39) gebildet ist, die für die Aufnahme des Ventilgehäuses (1) eine bevorzugt kreiszylindrische Ausnehmung (41) aufweist, deren Mittenachse parallel zur Mittenachse der Aufnahmeplatte (39) verlaufend zu dieser versetzt angeordnet ist.

4. Steuervorrichtung nach einem der vorstehenden Ansprüche, **dadurch gekennzeichnet, dass** der Verbindungskanal (55) für den Druckversorgungsanschluss (P) und der Verbindungskanal (57) für den Nutzanschluss (A) mit ihrer jeweiligen Längsachse zumindest annähernd denselben Abstand zu der Verfahrachse des Ventilschiebers (5) einnehmen und dass die Längsachse des Verbindungskanals (59) für den Tank- oder Rücklaufanschluss (T) deckungsgleich mit der Verfahrachse des Ventilschiebers (5) ist.

5. Steuervorrichtung nach einem der vorstehenden Ansprüche, **dadurch gekennzeichnet, dass** der Druckversorgungs-Verbindungskanal (55) im Steuerblock (3) verlaufend in axialer Richtung länger ausgebildet ist als der Nutzanschluss-Verbindungskanal (A) und dieser wiederum länger als der Tank-Verbindungskanal (59) ist.

6. Steuervorrichtung nach einem der vorstehenden Ansprüche, **dadurch gekennzeichnet, dass** der Steuerraum (49), in den der Druckversorgungs-Verbindungskanal (55) ausmündet, in Betätigungsrichtung des Ventilschiebers (5) gesehen oberhalb des Steuerraums (51) liegt, in den der Nutzanschluss-Verbindungskanal (57) ausmündet, und dass diese beiden Steuerräume (49, 51) durch die Aufnahme (39) fluiddicht voneinander getrennt sind.

7. Steuervorrichtung nach einem der vorstehenden Ansprüche, **dadurch gekennzeichnet, dass** der Steuerraum (51), in den der Nutzanschluss-Verbindungskanal (57) ausmündet, in Betätigungsrichtung des Ventilschiebers (5) gesehen oberhalb des Steuerraums (53) liegt, in den der Tank-Verbindungskanal (59) ausmündet, und dass diese beiden benachbarten Steuerräume von Ventilgehäuseteilen (43) voneinander fluiddicht getrennt sind, die von Teilen (42) des Steuerblocks (3) umfasst sind.

8. Steuervorrichtung nach einem der vorstehenden Ansprüche, **dadurch gekennzeichnet, dass** die Aufnahmeplatte (39) außenumfangsseitig von einer Dichteinrichtung (45) umfasst ist, die die Abdichtung zwischen Aufnahmeplatte (39) und Steuerblock (3) herstellt.

9. Steuervorrichtung nach einem der vorstehenden Ansprüche, **dadurch gekennzeichnet, dass** der Steuerblock (3) Bestandteil eines Getriebegehäuses, insbesondere einer mobilen Arbeitsmaschine ist oder auf das Getriebegehäuse aufsetzbar ist.

## Claims

1. A control device with a valve apparatus (1, 5) and a control block (3) for selectively fluidically connecting and disconnecting fluid connection points (A, P, T) formed on the control block (3) by means of the valve apparatus (1, 5), which has a valve casing (1) and a valve gate (5) longitudinally-displaceably guided inside the valve casing (1) and which controls fluid-conducting connection channels (55, 57, 59) running between the connection points (A, P, T), which connection channels are arranged in the control block (3), into which the valve apparatus (1, 5) is at least partially inserted wherein, proceeding from the respective fluid connection points (A, P, T), the connection channels (55, 57, 59) respectively connected to the fluid connection points are arranged running parallel to each other until the connection channels open into a respectively assigned control chamber (49, 51, 53) of the valve apparatus (1, 5) and wherein the valve apparatus (1, 5) is held in a receptacle (39) received in the control block (3), which separates at least two adjacently arranged control chambers (49, 51) from each other, **characterised in that,** in respect of the parallel arrangement of the connection channels (55, 57, 59), the receptacle (39) for the valve apparatus (1, 5) is accommodated eccentric relative to the displacement axis of the valve gate (5), which is longitudinally-displaceably guided inside the valve casing (1), in the control block (3).

2. The control device according to claim 1, **characterised in that** the valve apparatus (1, 5) is provided with a casing (1), which itself at least partially forms a control chamber (53) and/or which has at least one bore (50, 52) which opens into a control chamber (49,51).

3. The control device according to claim 1 or 2, **characterised in that** the receptacle is formed from a circular cylindrical receiving plate (39), which has a preferably circular cylindrical recess (41) for receiving the valve casing (1), the centre axis of which recess, running parallel to the centre axis of the receiving plate (39), is arranged offset relative to same.

4. The control device according to one of the preceding claims, **characterised in that** the connection channel (55) for the pressure supply connection (P) and the connection channel (57) for the service connection (A) take up, with their respective longitudinal axis, at least approximately the same distance from the displacement axis of the valve gate (5), and that the longitudinal axis of the connection channel (59) for the tank connection or return connection (T) is congruent with the displacement axis of the valve gate (5).

5. The control device according to one of the preceding claims, **characterised in that** the pressure supply connection channel (55) running in the control block (3) is formed longer in axial direction than the service connection connecting channel (A), and this, in turn, is formed longer than the tank connection channel (59).

6. The control device according to one of the preceding claims, **characterised in that** the control chamber (49) into which the pressure supply connection channel (55) opens lies above the control chamber (51) into which the service connection connecting channel (57) opens, viewed in actuation direction of the valve gate (5), and that these two control chambers (49, 51) are separated from each other in a fluid-tight manner by means of the receptacle (39).

7. The control device according to one of the preceding claims, **characterised in that** the control chamber (51) into which the service connection connecting channel (57) opens lies above the control chamber (53) into which the tank connection channel (59) opens, viewed in actuation direction of the valve gate (5), and that these two adjacent control chambers are separated from each other in a fluid-tight manner by valve casing parts (43) which are encompassed by parts (42) of the control block (3).

8. The control device according to one of the preceding claims, **characterised in that** the receiving plate (39) is encompassed on the outer peripheral side by a sealing device (45) which produces the seal between receiving plate (39) and control block (3).

9. The control device according to one of the preceding claims, **characterised in that** the control block (3) is a component of a transmission casing, in particular a mobile work machine, or can be attached to the transmission casing.

## Revendications

1. Dispositif de commande, comprenant un dispositif (1, 5) de soupape et un bloc (3) de commande pour, au choix, la connexion et la déconnexion fluidique de points (A, P, T) de raccordement de fluide constitués sur le bloc (3) de commande au moyen du dispositif (1, 5) de soupape, qui a un corps (1) de soupape et un tiroir (5) de soupape guidé avec possibilité de se déplacer longitudinalement dans le corps (1) de la soupape et qui commande des canaux (55, 57, 59) de connexion fluidique, qui s'étendent entre les points (A, P, T) de raccordement et qui sont disposés dans le bloc (3) de commande, dans lequel le dispositif (1, 5) de soupape est inséré au moins en partie, dans lequel, à partir des points (A, P, T) de raccordement de fluide respectifs, les canaux (55, 57, 59) de connexion, qui leur sont raccordés respectivement, sont disposés en s'étendant parallèlement les uns aux autres jusqu'à déboucher dans un espace (49, 51, 53) de commande associé respectivement du dispositif (1, 5) de soupape et dans lequel le dispositif (1, 5) de soupape est maintenu dans un logement (39) reçu dans le bloc (3) de commande et séparant l'un de l'autre au moins deux espaces (49, 51) de commande voisins, **caractérisé en ce que**, au vu du montage en parallèle des canaux (55, 57, 59) de connexion, le logement, sous la forme d'une plaque (39) de réception du dispositif (1, 5) de soupape, est reçu dans le bloc (3) de commande en-dehors du milieu par rapport à l'axe de déplacement du tiroir (5) de soupape, guidé avec possibilité de se déplacer longitudinalement, dans le corps (1) de la soupape.

2. Dispositif de commande suivant la revendication 1, **caractérisé en ce que** le dispositif (1, 5) de soupape est pourvu d'un corps (1), qui constitue soi-même, au moins en partie, un espace (53) de commande et/ou qui a le au moins un trou (50, 52) qui débouche dans un espace (49, 51) de commande.

3. Dispositif de commande suivant la revendication 1 ou 2, **caractérisé en ce que** le logement est formé d'une plaque (33) de réception cylindrique de section circulaire, qui a, pour la réception du corps (1) de la soupape, un évidement (41), de préférence cylindrique de section circulaire, dont l'axe médian s'étend parallèlement à l'axe médian de la plaque (39) de réception, en étant décalé par rapport à celle-ci.

4. Dispositif de commande suivant l'une des revendications précédentes, **caractérisé en ce que** le canal (55) de connexion pour le raccord (P) d'application d'une pression et le canal (57) de connexion pour le raccord (A) utile sont, au moins à peu près, à la même distance de l'axe de déplacement du tiroir (5) de la soupape et **en ce que** l'axe longitudinal du canal (59) de connexion du raccord (T) de réservoir ou de retour coïncide avec l'axe de déplacement du tiroir (5) de la soupape.

5. Dispositif de commande suivant l'une des revendications précédentes, **caractérisé en ce que** le canal (55) d'application de la pression-connexion, s'étendant dans le bloc (3) de commande, est plus long dans la direction axiale que le canal de connexion du raccord (A) utile et celui-ci est à son tour plus long que le canal (59) de connexion du réservoir.

6. Dispositif de commande suivant l'une des revendications précédentes, **caractérisé en ce que** l'espace (49) de commande, dans lequel débouche le canal (55) d'application d'une pression, se trouve, considéré dans le sens d'actionnement du tiroir (5) de soupape, au-dessus de l'espace (51) de commande, dans lequel débouche le canal (57) de connexion du raccord utile, et **en ce que** les deux espaces (49, 51) de commande sont séparés l'un de l'autre d'une manière étanche au fluide par le logement (39).

7. Dispositif de commande suivant l'une des revendications précédentes, **caractérisé en ce que** l'espace (51) de commande, dans lequel débouche le canal (57) de connexion du raccord utile, se trouve, considéré dans le sens d'actionnement du tiroir (5) de la soupape, au-dessus de l'espace (53) de commande, dans lequel débouche le canal (59) de connexion du réservoir, et **en ce que** ces deux espaces de commande voisins sont séparés d'une manière étanche au fluide l'un de l'autre par des parties (43) du corps de la soupape, qui sont entourées de parties (42) du bloc (3) de commande.

8. Dispositif de commande suivant l'une des revendications précédentes, **caractérisé en ce que** la plaque (39) de réception est entourée, du côté du pourtour extérieur, d'un dispositif (45) d'étanchéité, qui ménage l'étanchéité entre la plaque (39) de réception et le bloc (3) de commande.

9. Dispositif de commande suivant l'une des revendications précédentes, **caractérisé en ce que** le bloc (3) de commande est une partie constitutive d'un carter de transmission, notamment d'une machine mobile fournissant du travail, ou peut être mis sur le carter de transmission.
